# DEMANDE DE BREVET EUROPEEN

(11) **EP 4 329 120 A1**
(43) Date de publication de la demande: **28.02.2024**
(21) Numéro de dépôt: 23192676.7
(22) Date de dépôt: 22.08.2023
(51) Int. Cl.: H02G 3/30, F16B 2/08, F16L 3/233

(54) **COLLIERS DE SERRAGE RÉSISTANTS AU FEU**

(30) Priorité: 26.08.2022 FR 2208568
(71) Demandeur: Nexans, 92400 Courbevoie (FR)
(72) Inventeur: GYPPAZ, Franck, 69003 LYON (FR)
(74) Mandataire: Ipsilon

(57) **Abrégé**

La présente invention concerne un collier de serrage comportant une structure (1) munie d'un relief (2), typiquement un relief cranté, et d'une ouverture traversante (3) apte à coopérer avec ledit relief (2) pour fermer le collier de serrage, caractérisé en ce que ladite structure (1) comporte au moins une âme (4) munie d'un orifice traversant (5), l'orifice et l'ouverture traversante (5,3) de la structure (1) définissant un passage pour y retenir le relief (2), ladite âme (4) comportant au moins un fil continu de matière minérale résistante au feu, ladite âme (4) délimitant ledit orifice traversant (5) et s'étendant continûment jusqu'au relief (2), et en ce que ladite âme (4) est revêtue en tout ou partie par un matériau polymère (8).

## Description

La présente invention concerne un collier de serrage résistant au feu comprenant au moins un fil minéral résistant au feu, un procédé de fabrication dudit collier de serrage, une utilisation d'au moins un fil minéral résistant au feu pour rendre résistant au feu ledit collier de serrage et un kit pour attacher au moins un câble électrique comprenant au moins un collier de serrage selon la présente invention.

En cas d'incendie, des moyens d'attache résistants au feu, tels que des colliers de serrage, permettent de limiter les dommages infligés à l'intégrité de la structure soumise au feu. Notamment, des colliers de serrage de type serre-câbles électrique résistants au feu permettent de limiter les dégâts occasionnés aux systèmes électriques, limitant ainsi potentiellement le risque d'aggravation de l'incendie par la génération par exemple de courts-circuits ou une exposition supplémentaire dangereuse de parties conductrices de câbles électriques (ces derniers n'étant plus soutenus).

Ainsi, pour améliorer la résistance au feu de colliers de serrage, plusieurs solutions sont proposées dans l'art antérieur.

Dans le document brevet US2009126989 est décrit un système de protection passif contre les incendies pour une installation électrique comprenant notamment des serre-câbles en céramique résistant au feu. Toutefois, les serre-câbles décrits ne présentent pas les aspects contemporains, en particulier pratiques tels que les systèmes autobloquants des serre-câbles modernes. Les serre-câbles décrits sont en effet de simples fils noués servant à attacher les câbles.

Dans le document EP0891028, des sangles ignifugées pour câbles sont décrites. Toutefois, les sangles décrites sont relativement larges et plutôt applicables aux câbles de télécommunication qui ne doivent pas être pliées ou serrées de manière à les plier.

Dans le document WO2015031233 sont décrits des serre-câbles fabriqués en des matériaux présentant une résistance aux flammes et à la chaleur. Toutefois, les matériaux utilisés dans les serre-câbles décrits ont plutôt des propriétés retardant leur détérioration face à un incendie. Ainsi, selon la sévérité de l'incendie, il peut ne plus subsister de moyen d'attache même sommaire du/des câble(s) initialement retenu(s).

Dans le document US2019085127 est décrit une composition pour colliers de serrage comprenant du polyamide et des charges telles que des fibres de céramique. Les serre-câbles utilisés pour fixer les câbles résistants au feu sur les chemins de câbles ou les échelles des installations électriques sont généralement en plastique à base de polyamide. Le polyamide est généralement utilisé en raison de son point de fusion élevé (220-270°C) par rapport aux autres plastiques afin qu'il puisse résister à des températures plus élevées. Cependant, le polyamide reste un plastique et est donc un bon combustible brûlant facilement. Ainsi, les colliers de serrage à base de polyamide représentent l'un des points faibles de telles installations électriques en termes de résistance au feu.

La présente invention vise notamment à pallier les inconvénients de l'art antérieur.

Plus particulièrement, un but de l'invention est de fournir un collier de serrage, notamment un serre-câble, laissant au moins un résidu du collier de serrage remplissant la fonction initiale du collier de serrage lors de sa pose.

### RESUME DE L'INVENTION

Un premier objet selon la présente invention concerne un collier de serrage comportant une structure munie d'un relief, typiquement un relief cranté, et d'une ouverture traversante apte à coopérer avec ledit relief pour fermer le collier de serrage, caractérisé en ce que ladite structure comporte au moins une âme munie d'un orifice traversant, l'orifice et l'ouverture traversante de la structure définissant un passage pour y retenir le relief, ladite âme comportant au moins un fil continu de matière minérale résistante au feu, ladite âme délimitant ledit orifice traversant et s'étendant continûment jusqu'au relief, et en ce que ladite âme est revêtue en tout ou partie par un matériau polymère.

Ainsi, la continuité de dudit au moins un fil continu de matière minérale résistante au feu permet à celui-ci de constituer un lien résistant au feu même lorsque le(s) matériau(x) secondaire(s) du collier de serrage a/ont brulé(s).

L'invention concerne en outre un procédé de préparation d'un collier de serrage par moulage d'un matériau polymère, comprenant au moins une étape de placement d'au moins un fil continu de matière minérale résistante au feu dans un moule pour un tel collier de serrage préalablement à son moulage et/ou pendant son moulage.

Ainsi, l'un des intérêts de la présente invention est la facilité de mise en oeuvre d'un procédé permettant de réaliser les colliers de serrage selon la présente invention. Les étapes de fabrication du collier de serrage sont identiques à celles d'un collier de serrage classique, avec l'adjonction d'une étape de placement d'un fil minéral résistant au feu dans le moule avant injection du matériau polymère.

L'invention concerne également une utilisation d'au moins un collier de serrage tel que décrit présentement, pour attacher à un support ou regrouper ensemble un ou plusieurs câbles et/ou une ou plusieurs gaines de câble(s).

Le collier de serrage selon l'invention présente toutes les caractéristiques techniques modernes permettant une pose facilitée (via par exemple un système autobloquant impliquant un cliquet venant en butée contre l'un des reliefs (ou dent) du collier.

L'invention concerne de plus un kit pour technicien en électricité et/ou télécommunication comprenant au moins un collier de serrage tel que décrit présentement et au moins l'un des éléments suivants :
- au moins un câble électrique et/ou de télécommunication ;
- au moins une gaine pour câble électrique et/ou de télécommunication ; et/ou
- un support pour câble(s) électrique(s) tel qu'un rail métallique.

Etant donné que les colliers de serrage selon la présente invention peuvent présenter toutes les caractéristiques extérieures de colliers de serrage classiques, l'un des intérêts de la présente invention, est de simplement pouvoir remplacer des colliers de serrage classiques par ceux selon la présente invention dans des kits existants. Les kits proposés peuvent ainsi présenter des éléments avec d'éventuelles propriétés de résistance au feu, maintenus par des colliers de serrages selon la présente invention.

### DEFINITIONS

Par « collier de serrage », on entend selon la présente invention un appareil mécanique assurant le maintien en position, présentant un passage, tel qu'un emmanchement (essentiellement) cylindrique, éventuellement formé par plusieurs éléments pouvant être fixés les uns aux autres de manière réversible. Le but d'un collier de serrage est donc de maintenir un ou plusieurs éléments les uns avec les autres et/ou de les attacher à un support. Par exemple, de tels éléments peuvent être des câbles électriques, des câbles de télécommunication, des gaines pour câble(s) électrique(s) ou des gaines pour câble(s) de télécommunication(s).

Par « fil continu de matière minérale résistant au feu », on entend selon la présente invention un fil ne présentant pas d'interruption mécanique, présentant une nature minérale et des propriétés physico-chimiques le rendant résistant au feu. Ainsi, un fil continu de matière minérale résistante au feu selon la présente invention peut être constitué de plusieurs fibres liées les unes aux autres de manière à créer un réseau suffisamment solide pour créer un lien d'apparence filaire. Ainsi, les fils minéraux selon la présente invention peuvent être obtenus directement à partir de roches (e.g., wollastonite, sépiolite, etc.) et/ou produits à partir de minéraux (e.g., fibre de verre produite à partir de silice, laine de roche, fibre céramique en particulier réfractaire, fibre d'alumine, etc.). De manière indépendante à l'objet de la présente invention, les minéraux recherchés pour produire des fibres le sont pour leur qualités d'inertie chimique et/ou thermique, parfois pour leurs propriétés optiques ou piézoélectriques. L'objet de la présente invention bénéficie donc des connaissances du domaines des fibres minérales pour en exploiter celles qui présentent les caractéristiques physico-chimiques les mieux adaptées. De manière préférée, un « fil continu de matière minérale résistant au feu » est constitué d'une seule fibre telle définie ci-dessus.

Par « résistant au feu », on entend selon la présente invention un produit présentant des caractéristiques d'intégrité face au feu (donc en présence d'une flamme), voire un produit impossible à bruler à des températures allant jusqu' à 500°C, préférentiellement allant jusqu' à 800°C, plus préférentiellement allant jusqu' à 1000°C, encore plus préférentiellement allant jusqu' à 1200°C, voire jusqu'à 1500°C. Les serre-câbles présentant cette capacité, dits « résistants au feu » sont destinés à être mis en oeuvre en particulier dans des dispositifs électriques dont l'intégrité électrique est maintenue dans les conditions d'un incendie : ils continuent à assurer leur rôle même lorsqu'ils sont soumis à haute température. Ce type de serre-câble résistant au feu présente en général en corollaire de bonnes performances en réaction au feu, avec des propriétés intéressantes de non-propagation de l'incendie et de non-production de fumée. Les capacités de résistance au feu d'un collier de serrage peuvent être quantifiées notamment selon les tests standardisés des normes EN 50200, IEC 60331-1, ou IEC60331-2.

Par « durcissement du matériau polymère », on entend selon la présente invention une étape classique permettant le durcissement d'un matériau polymère fluide ou mou par réaction interne du type polycondensation ou par un durcissement amorphe (de la même façon que du verre chauffé à haute température peut se figer en refroidissant). Ainsi, une réaction de polycondensation peut être obtenue par exemple par réticulation via une variation de température, l'ajout d'un matériau durcissant, tel qu'un catalyseur de réticulation ionique ou radicalaire, une variation de pH, ou l'application d'un rayon électromagnétique tel que des rayons UV.

Par « matériau thermoplastique », on entend selon la présente invention un matériau susceptible de se ramollir par chauffage au-dessus d'une certaine température et durcir par refroidissement. Ainsi, le chauffage permet d'atteindre la température de fusion du matériau sans que la matière ramollie soit dégradée thermiquement et que les contraintes mécaniques de cisaillement introduites par un procédé de mise en forme ne modifient la structure moléculaire empêchant ce matériau de durcir à nouveau par refroidissement. Typiquement, les matériaux thermoplastiques peuvent endurer plusieurs cycles de fusion-durcissement sans altération de leurs propriétés physico-chimiques.

Par « matériau thermodurcissable », on entend selon la présente invention un matériau mou ou fluide susceptible de se durcir par chauffage, via par exemple une réticulation, au-dessus d'une certaine température et maintenir sa dureté une fois refroidit. Un tel matériau thermodurcissable est fréquemment préparé en mélangeant une ou plusieurs résines à l'état liquide ou pâteux et réagissant ensemble par exemple sous l'application de conditions favorisant la réticulation telle qu'une variation de température, une variation de pH, ou l'application d'un rayon électromagnétique tel que des rayons UV, etc.

Par « technicien en électricité », on entend selon la présente invention une personne installant ou modifiant un matériel électrique dans un cadre professionnel ou personnel.

Par « technicien en télécommunication », on entend selon la présente invention une personne installant ou modifiant un matériel de télécommunication dans un cadre professionnel ou personnel.

### DESCRIPTION DETAILLEE

### Collier de serrage :

La présente invention concerne donc un collier de serrage tel que décrit ci-dessus.

De manière préférée, le collier de serrage selon la présente invention est caractérisé en ce que ledit au moins un fil continu forme ledit orifice traversant à une première de ses extrémités et s'étend continûment jusqu'audit relief, voire tout au long dudit relief et au-delà, jusqu'à une seconde de ses extrémités.

Ainsi, un avantage selon la présente invention est de pouvoir choisir la longueur de la zone du collier de serrage résistant au feu. En effet, ce type de collier de serrage comprend souvent une partie qui est coupée une fois le collier de serrage placé : limiter la longueur du fil résistant au feu permet de diminuer les coûts de fabrication, et donc de diminuer les coûts de commercialisation dudit collier.

De manière avantageuse, la fin de la zone du collier de serrage résistant au feu peut être identifiée par un marquage extérieur sur le collier.

De manière plus générale, le collier de serrage selon la présente invention peut présenter un marquage extérieur permettant de l'identifier comme résistant au feu.

De manière préférée, le collier de serrage selon la présente invention est caractérisé en ce que ladite âme comporte plusieurs fils continus de matière minérale résistante au feu, entrelacés ou non.

L'intérêt d'avoir plusieurs fils continus est de pouvoir augmenter la capacité de résistance mécanique du collier de serrage soumis au feu.

De manière préférée, le collier de serrage selon la présente invention est caractérisé en ce que ledit au moins un fil continu est formé d'une seule fibre ou alternativement de plusieurs fibres entrelacées, par exemple tressées, tissées, non tissées ou toronnées.

L'avantage d'avoir un fil continu formé d'une seule fibre est d'obtenir une âme fine et une économie de fil continu.

L'avantage d'avoir plusieurs fibres entrelacées, par exemple tressées, tissées ou toronnées est d'obtenir un fil continu présentant une bonne résistance mécanique en particulier lorsqu'il est soumis à des mouvements de flexions.

De manière plus préférée, le collier de serrage selon la présente invention est caractérisé en ce que la ou les fibres sont choisies dans la liste consistant en une fibre de bore, une fibre de verre, une fibre d'acide silicique, une fibre céramique, une fibre de basalte, une fibre d'aramide et mélanges de ceux-ci, de préférence des mélanges de deux ou plusieurs de ces fibres, identiques ou différentes.

Selon un mode de réalisation possible, le collier de serrage selon la présente invention peut être caractérisé en ce que la ou les fibres sont choisies dans la liste consistant en une fibre de verre, une fibre céramique, une fibre de basalte et mélanges de ceux-ci. Selon un autre mode de réalisation, la ou les fibres sont choisies dans la liste consistant en une fibre de bore, une fibre d'acide silicique, une fibre céramique et leurs mélanges. Selon un mode intéressant, ledit au moins un fil continu est formé d'une seule fibre ou de plusieurs fibres entrelacées (par exemple tressées, tissées ou toronnées) et la ou les fibres sont choisies parmi une fibre de bore, une fibre d'acide silicique, une fibre céramique et les mélanges de deux ou plusieurs de ces fibres, identiques ou différentes.

Un autre avantage de la présente invention est de présenter un moyen de blocage du fil continu en l'absence de matériau polymère. Ceci est assuré par l'orifice traversant de fil continu de matière minérale résistante au feu.

Ainsi, de manière préférée, le collier de serrage selon la présente invention est caractérisé en ce que l'orifice traversant est configuré pour retenir, par exemple par effet de friction, en l'absence de matériau polymère ladite âme comportant au moins un fil continu de matière minérale résistante au feu.

La retenue du fil continu de matière minérale résistante au feu peut par exemple être améliorée par l'ajout de renflements (tels que des noeuds), de préférence tout au long de sa longueur). Ainsi, selon un mode intéressant, ledit au moins un fil continu compris dans l'âme du collier de serrage de l'invention comporte des renflements, tels que des noeuds, de préférence tout au long de sa longueur. La retenue du fil est due dans ce mode de réalisation à un double effet de friction et de butée du fil avec lui-même.

En outre, l'âme dudit collier de serrage est revêtue en tout ou partie par un matériau polymère.

Ce matériau polymère peut être constitué par un seul type de polymère, ou constitué par plusieurs types de polymères.

Ce matériau polymère permet de contrôler la mise en forme du collier de serrage et de lui fournir les spécificités nécessaires à sa/ses fonctions.

Par exemple, le collier de serrage selon la présente invention est caractérisé en ce qu'il s'agit d'un serre-câble électrique, un serre-câble de télécommunication, un collier de serrage pour gaine de câble électrique ou un collier de serrage pour câble de télécommunication.

De manière préférée, le collier de serrage selon la présente invention est caractérisé en ce que le matériau polymère est un matériau polymère thermoplastique, un matériau polymère thermo-durci, un matériau présentant une résistance aux fortes températures ou un matériau inflammable.

En effet, le fil continu de matière minérale résistante au feu permet d'assurer la fonction du serre-câble même lorsque le matériau polymère s'est enflammé. En principe, le matériau polymère peut ainsi être un matériau inflammable dans les conditions d'un incendie.

Au sens de la présente description, on désigne par « matériau inflammable » un matériau présent dans le serre-câble, et qui est, en tant que tel (à savoir lorsqu'il est isolé hors du serre-câble), susceptible de s'enflammer lorsqu'il est en mis en contact avec un foyer d'incendie.

Dans un mode de réalisation avantageux, afin d'éviter la propagation d'un incendie, les matériaux sont choisis de manière à présenter une résistance, même temporaire au feu. Ceci n'exclut pas en revanche l'utilisation de plusieurs matériaux polymères, dont au moins un est inflammable dans les conditions d'un incendie et un autre présente des caractéristiques de résistance aux conditions d'un incendie. Ce dernier peut englober ou recouvrir un matériau inflammable pour le préserver d'un éventuel incendie.

A titre de polymères inflammables présents dans le serre-câble selon la présente invention, on peut notamment citer le polychlorure de vinyle et les polyoléfines et notamment les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Un matériau inflammable présent dans le collier de serrage selon la présente invention peut par exemple comprendre au moins un polymère thermoplastique choisi parmi le polyéthylène (PE), le polypropylène (PP) ou le polychlorure de vinyle (PVC).

Le matériau inflammable peut contenir un ou plusieurs types de charges, notamment une charge ignifugeante, en particulier une charge minérale ignifugeante hydratée telle qu'un hydroxyde de magnésium ou un trihydroxyde d'aluminium et/ou une charge inerte, en particulier choisi parmi le talc, les micas, les argiles déshydratées et un de leurs mélanges.

Dans un mode réalisation, le collier de serrage selon la présente invention peut être caractérisé en ce que le matériau polymère est un matériau thermoplastique. L'avantage d'un matériau thermoplastique est la souplesse qu'il procure lors de la pose.

Le matériau thermoplastique utilisé peut être par exemple choisi dans la liste consistant en un polyéthylène (PE), un polypropylène (PP), un polychlorure de vinyle (PVC), un polyamide et un mélange de ceux-ci.

La quantité massique de matériau polymère du collier de serrage vis-à-vis de la quantité massique du ou des fils continus de matière(s) minérale(s) résistante(s) au feu contenu(s) dans ledit collier de serrage peut varier en fonction des éléments serrés ou supportés.

Dans le cas d'éléments légers à serrer, peu de fil(s) continu(s) de matière(s) minérale(s) résistante(s) au feu peuvent être employés, réduisant ainsi le coût financier dudit collier de serrage.

Dans le cas d'éléments plus lourds, plus de fil(s) continu(s) de matière(s) minérale(s) résistante(s) au feu peuvent être employés, augmentant ainsi la résistance physique dudit collier de serrage.

Les quantités de fil(s) continu(s) de matière(s) minérale(s) résistante(s) au feu sont facilement déterminables en testant les colliers de serrages dénués de matériau polymère : des seuils de résistances peuvent ainsi être déterminés.

Dans un mode de réalisation particulier, la quantité massique de matériau polymère du collier de serrage selon la présente invention peut être inférieure ou égale à la quantité massique du ou des fils continus de matière(s) minérale(s) résistante(s) au feu contenu(s) dans ledit collier de serrage.

En particulier, le ratio massique matériau polymère : fil(s) continu(s) de matière(s) minérale(s) résistante(s) au feu contenu(s) dans ledit collier de serrage peut être compris respectivement entre 1 : 1 et 1 : 10, préférentiellement compris entre 1 : 1,5 et 1 : 5, ou encore 1 : 2 et 1 : 3.

Dans un autre mode de réalisation particulier, la quantité massique de matériau polymère du collier de serrage selon la présente invention peut être supérieure ou égale à la quantité massique du ou des fils continus de matière(s) minérale(s) résistante(s) au feu contenu(s) dans ledit collier de serrage.

En particulier, le ratio massique matériau polymère : fil(s) continu(s) de matière(s) minérale(s) résistante(s) au feu contenu(s) dans ledit collier de serrage peut être compris respectivement entre 1 : 0,01 et 1 : 1, préférentiellement compris entre 1 : 0,1 et 1 : 0,9, ou encore 1 : 0,4 et 1 : 0,6.

Le matériau polymère rempli ainsi la fonction de protection physique de l'âme du collier de serrage selon une utilisation classique.

Le matériau polymère permet également de produire un collier de serrage avec les caractéristiques extérieures classiques de collier de serrage. Ainsi l'utilisateur pourra ainsi facilement utiliser les colliers de serrage selon la présente invention comme un collier de serrage classique.

### Procédé de préparation d'un collier de serrage :

La présente invention concerne également un procédé de préparation d'un collier de serrage tel que décrit ci-dessus.

De manière préférée, l'objet de la présente invention concerne un procédé de préparation d'un collier de serrage tel que décrit présentement, caractérisé en ce que ledit procédé comprend les étapes successives suivantes :
(a) placement d'au moins un fil minéral résistant au feu dans un moule de fabrication de collier de serrage ;
(b) insertion d'un matériau polymère fluide ou mou, tel qu'un matériau polymère thermoplastique ou thermodurcissable, dans le moule de l'étape (a) ;
(c) durcissement du matériau polymère ; et
(d) démoulage du collier de serrage obtenu à l'étape (c).

Ainsi, l'objet de la présente invention concerne également le collier de serrage susceptible d'être obtenu par le procédé décrit ci-dessus.

L'étape (a) de placement d'au moins un fil minéral résistant au feu dans un moule de fabrication de collier de serrage du procédé selon la présente invention est réalisable en utilisant toutes les techniques usuelles connues dans l'art.

Plus particulièrement, le placement dudit au moins un fil minéral résistant au feu dans un moule peut se faire en appliquant une tension au fil, maintenu de part et d'autre dudit moule.

Ledit au moins un fil minéral résistant au feu est tel que défini ci-dessus.

Ainsi, ledit au moins un fil continu peut être formé d'une seule fibre ou alternativement de plusieurs fibres entrelacées, par exemple tressées, tissées, non tissées ou toronnées.

Le moule peut être réalisé en tout matériau adéquat, par exemple adapté à résister et maintenir sa forme lors de l'application de variations de températures et/ou de pressions.

En particulier le moule peut comprendre ou consister en au moins un métal, éventuellement sous forme d'alliage, tel que l'acier.

Le moule peut être revêtu en partie ou en totalité d'un revêtement de surface aidant au démoulage de la pièce fabriquée. Un tel revêtement peut comprendre ou consister en des composés perfluorés tel que le Téflon ^{®}.

L'étape (b) d'injection d'un matériau thermoplastique ou thermodurcissable dans le moule de l'étape (a) est réalisable en utilisant toutes les techniques usuelles connues dans l'art.

Le matériau thermoplastique utilisé peut être par exemple choisi dans la liste consistant en un polyéthylène (PE), un polypropylène (PP), un polychlorure de vinyle (PVC), un polyamide et un mélange de ceux-ci.

L'injection peut être réalisée à toute pression applicable. De manière préférée, la pression appliquée est comprise entre 1 bar et 200 bars, par exemple comprise entre 5 bars et 100 bars, entre 10 bars et 50 bars, ou encore entre 20 et 30 bars.

L'étape (c) de durcissement du matériau thermoplastique est réalisable en utilisant toutes les techniques usuelles connues dans l'art.

Dans le cadre de la présente invention, le durcissement peut être réalisé simplement en abaissant la température appliquée au moule et son contenu à une température ambiante (par exemple comprise entre 0°C et 50°C, préférentiellement entre 10°C et 30°C, plus préférentiellement entre 20°C et 25°C).

En particulier, l'étape (c) de durcissement peut également être réalisée par réticulation de l'un des matériaux utilisés.

L'étape de réticulation est à adapter au matériau thermoplastique utilisé selon les conditions usuelles d'utilisation liées à ces matériaux.

L'étape (d) de démoulage du collier de serrage obtenu à l'étape (c) est réalisable en utilisant toutes les techniques usuelles connues dans l'art.

En particulier, le démoulage peut être facilité par l'application d'une étape préalable de lubrification d'au moins une surface du moule avant le commencement du procédé de fabrication tel que décrit présentement.

En outre, le démoulage peut être réalisé en appliquant par exemple une pression d'un fluide tel que l'air pour éjecter le collier de serrage du moule.

Dans le cas où cela est nécessaire, le démoulage peut comprendre une étape préalable ou postérieure au démoulage de découpage de surplus de matériau(x) non voulus dans le produit fini, telles qu'au moins un fil minéral résistant au feu dépassant du collier de serrage réalisé, ou toute autre excroissance non voulue dans le produit final.

Suite au démoulage, le collier de serrage selon la présente invention est récupéré et éventuellement soumis à une étape supplémentaire de traitement selon les besoins.

Le procédé peut en outre comprendre une étape de conditionnement du ou des produits obtenus, par exemple en insérant ces produits dans des boîtes, tels que des boites en cartons et/ou dans des sachets, tels que des sachets en matière plastique.

### Utilisation :

L'utilisation selon la présente invention comprend toutes les particularités détaillées pour le collier de serrage tel que décrit ci-dessus (e.g. ; matériaux utilisés, disposition et nature du ou des fils minéraux résistants au feu utilisés, formes nature et caractéristiques des colliers de serrage utilisés tels que des serre-câbles).

### Kit :

Le kit selon la présente invention a pour vocation d'offrir à l'utilisateur (tel qu'un électricien) la possibilité de regrouper sous la forme d'une combinaison de produits, au moins un collier de serrage selon la présente invention avec d'autres accessoires et produits utiles au but recherché.

Ainsi, dans le cas particulier du câblage électrique, la présente invention propose de fournir au moins un serre-câble selon la présente invention et un support pour câble(s) électrique(s) tel qu'un rail métallique.

Un kit selon la présente invention peut comprendre au moins un serre-câble selon la présente invention et au moins un produit choisi dans la liste consistant en un câble électrique, un support pour câble(s) électrique(s), des connecteurs électriques pour câble(s) électrique(s), au moins un outil d'électricien tel qu'un tournevis, un dénudeur de fils, une pince coupante, une perceuse-visseuse, au moins un élément pour tableau électrique et une gaine pour câble électrique.

De manière préférée, la présente invention concerne un kit pour attacher au moins un câble électrique comprenant au moins un collier de serrage, tel qu'un serre-câble, selon la présente invention et optionnellement un support pour câble(s) électrique(s) tel qu'un rail métallique

En outre, dans le cas particulier du câblage de télécommunication(s), la présente invention propose de fournir au moins un serre-câble selon la présente invention et un support pour câble(s) de télécommunication(s) tel qu'un rail métallique.

Un kit selon la présente invention peut comprendre au moins un serre-câble selon la présente invention et au moins un produit choisi dans la liste consistant en un câble de télécommunication(s), un support pour câble(s) de télécommunication(s), des connecteurs de fils pour câble(s) de télécommunication(s), au moins un outil d'un technicien de télécommunication(s) tel qu'un tournevis, un dénudeur de fils, une pince coupante, une perceuse-visseuse, au moins un élément pour tableau de télécommunication(s) et une gaine pour câble de télécommunication(s).

De manière préférée, la présente invention concerne un kit pour attacher au moins un câble de télécommunication(s) comprenant au moins un collier de serrage, tel qu'un serre-câble, selon la présente invention et optionnellement un support pour câble(s) de télécommunication(s)tel qu'un rail métallique.

### FIGURES

On décrira ci-après, à titre d'exemples non limitatifs, des formes d'exécution de la présente invention, en référence aux figures annexées sur lesquelles :
[Fig.1] représente une vue en perspective d'un collier de serrage selon la présente invention.
[Fig.2] représente une vue de côté en coupe d'un collier de serrage selon la présente invention dans une position ouverte rectiligne.
[Fig.3] représente une vue de côté en perspective d'un collier de serrage selon la présente invention dans une position ouverte rectiligne.

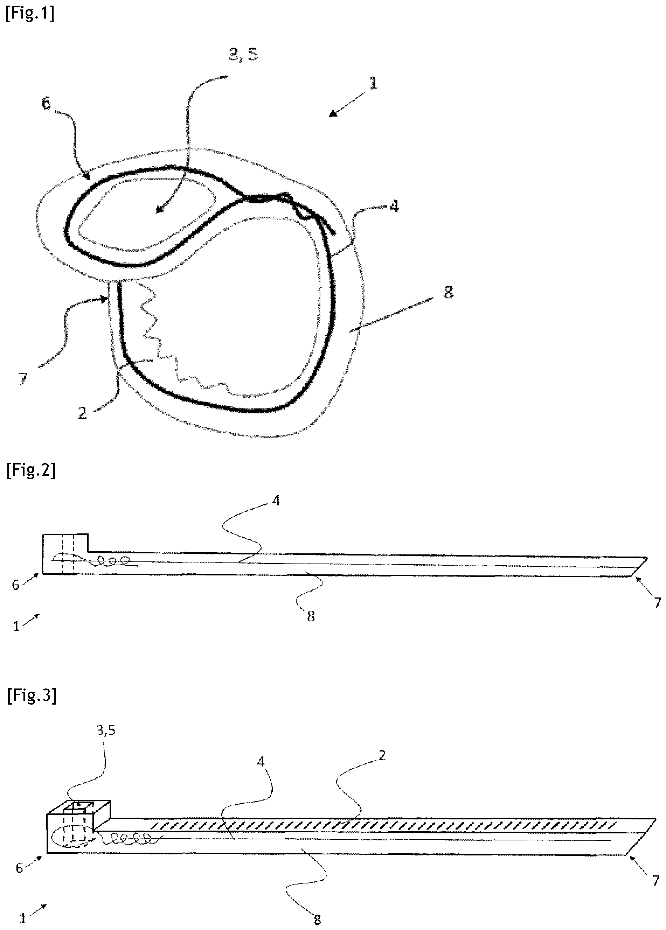

En référence aux figures 1, 2 et 3, le collier de serrage comporte une structure 1 munie d'un relief 2. Le relief 2, typiquement cranté, permet en coopération avec l'ouverture traversante 3 de fermer le collier de serrage. La structure 1 comporte au moins une âme 4 munie d'un orifice traversant 5.

L'orifice traversant 5 et l'ouverture traversante 3 de la structure 1 définissent ainsi un passage pour y retenir le relief 2.

Classiquement l'association du relief 2 en coopération avec l'ouverture traversante 3 est connue comme étant un système de fermeture autobloquant présentant un cliquet (non représenté ici) qui vient butée contre chaque relief.

L'âme 4 comporte au moins un fil continu de matière minérale résistante au feu.

L'âme 4 délimite ledit orifice traversant 5 et s'étend continûment jusqu'au relief 2.

Un matériau polymère 8 entoure en tout ou partie l'âme 4. Ainsi, l'âme 4 est revêtue en tout ou partie par un matériau polymère 8.

Les figures 1, 2 et 3 sont des représentations du même dispositif, mais en configuration totalement ouverte pour les figures 2 et 3 et en cours de fermeture pour la figure 1. Ainsi, dans la figure 1, la deuxième extrémité 7 est placée vers l'orifice et l'ouverture traversant 5,3 de la structure 1 lors de la fermeture.

### EXEMPLE

Plusieurs essais ont été réalisés avec de la fibre de basalte noyée dans du polymère classique permettant de maintenir un câble. Le mode d'essai utilisé était selon la norme EN50200/IEC60331-2 avec un câble résistant au feu. Il a pu être constaté que la performance était maintenue avec maintien du câble en position pendant toute la durée de l'essai.

## Revendications

1. Collier de serrage comportant une structure (1) munie d'un relief (2), typiquement un relief cranté, et d'une ouverture traversante (3) apte à coopérer avec ledit relief (2) pour fermer le collier de serrage, **caractérisé en ce que** ladite structure (1) comporte au moins une âme (4) munie d'un orifice traversant (5), l'orifice et l'ouverture traversante (5,3) de la structure (1) définissant un passage pour y retenir le relief (2), ladite âme (4) comportant au moins un fil continu de matière minérale résistante au feu, ladite âme (4) délimitant ledit orifice traversant (5) et s'étendant continûment jusqu'au relief (2), et **en ce que** ladite âme (4) est revêtue en tout ou partie par un matériau polymère (8).

2. Collier de serrage selon la revendication 1, où la quantité massique de matériau polymère du collier de serrage est inférieure ou égale à la quantité massique du ou des fils continus de matière(s) minérale(s) résistante(s) au feu contenu(s) dans ledit collier de serrage.

3. Collier de serrage selon la revendication 2, où le ratio massique du matériau polymère au fil(s) continu(s) de matière(s) minérale(s) résistante(s) au feu contenu(s) dans ledit collier de serrage est compris entre 1 : 1 et 1 : 10.

4. Collier de serrage selon l'une des revendications précédentes, **caractérisé en ce que** ledit au moins un fil continu forme ledit orifice traversant (5) à une première de ses extrémités (6) et s'étend continûment jusqu'audit relief (2), voire tout au long dudit relief (2) et au-delà, jusqu'à une seconde de ses extrémités (7).

5. Collier de serrage selon l'une des revendications précédentes, **caractérisé en ce que** ladite âme (4) comporte plusieurs fils continus de matière minérale résistante au feu, entrelacés ou non.

6. Collier de serrage selon l'une quelconque des revendications précédentes, **caractérisé en ce que** ledit au moins un fil continu est formé d'une seule fibre ou alternativement de plusieurs fibres entrelacées, par exemple tressées, tissées, non tissées ou toronnées.

7. Collier de serrage selon la revendication 6, **caractérisé en ce que** la ou les fibres sont choisies dans la liste consistant en une fibre de bore, une fibre de verre, une fibre d'acide silicique, une fibre céramique, une fibre de basalte, une fibre d'aramide et mélanges de ceux-ci.

8. Collier de serrage selon la revendication 7, **caractérisé en ce que** la ou les fibres sont choisies dans la liste consistant en une fibre de bore, une fibre d'acide silicique, une fibre céramique, et leurs mélanges.

9. Collier de serrage selon l'une quelconque des revendications précédentes, **caractérisé en ce que** l'orifice traversant (5) est configuré pour retenir, par exemple par effet de friction, en l'absence de matériau polymère (8) ladite âme (4) comportant au moins un fil continu de matière minérale résistante au feu.

10. Collier de serrage selon la revendication 9, où ledit au moins un fil continu compris dans l'âme du collier de serrage de l'invention comporte des renflements, tels que des noeuds.

11. Collier de serrage selon l'une quelconque des revendications précédentes, **caractérisé en ce qu'**il s'agit d'un serre-câble électrique, un serre-câble de télécommunication, un collier de serrage pour gaine de câble électrique ou un collier de serrage pour câble de télécommunication.

12. Procédé de préparation d'un collier de serrage selon l'une quelconque des revendications précédentes par moulage d'un matériau polymère (8), comprenant au moins une étape de placement d'au moins un fil continu de matière minérale résistante au feu dans un moule pour un tel collier de serrage préalablement à son moulage et/ou pendant son moulage.

13. Utilisation d'au moins un collier de serrage selon l'une quelconque des revendications 1 à 7, pour attacher à un support ou regrouper ensemble un ou plusieurs câbles et/ou une ou plusieurs gaines de câble(s).

14. Kit pour technicien en électricité et/ou télécommunication comprenant au moins un collier de serrage selon l'une quelconque des revendications 1 à 7 et au moins l'un des éléments suivants :
- au moins un câble électrique et/ou de télécommunication ;
- au moins une gaine pour câble électrique et/ou de télécommunication ; et/ou
- un support pour câble(s) électrique(s) tel qu'un rail métallique.
